# EUROPEAN PATENT APPLICATION

(11) **EP 4 763 369 A1**
(43) Date of publication of application: **24.06.2026**
(21) Application number: 24222169.5
(22) Date of filing: 20.12.2024
(51) Int. Cl.: B08B 7/00, B08B 9/032, B29C 33/76, B30B 15/00

(54) **CLEANING ARRANGEMENT FOR COMPRESSION MOULDING TOOL AND METHOD FOR CLEANING THE COMPRESSION MOULDING TOOL**

(71) Applicant: Rottneros Packaging AB, 686 31 Sunne (SE)
(72) Inventor: CARLMAN, Pär, SE-686 95 VÄSTRA ÄMTERVIK (SE); EDQVIST, Marcus, SE-686 97 LYSVIK (SE); ZENANDER, Erik, SE-686 94 ROTTNEROS (SE); ANDERS, Åslund, SE-686 93 SUNNE (SE)
(74) Representative: Kransell & Wennborg KB

(57) **Abstract**

An in-line cleaning arrangement (100) for a compression moulding tool (102) for manufacturing fibrous pulp products. The compression moulding tool comprises a first moulding element (104) and a second moulding element (106) configured to press against the first moulding element to compress a fibrous pulp product located therebetween. An inlet (108) is connected to drain channels (202) of the second moulding element, and an outlet (110) is connected to drain channels (204) of the first moulding element. The cleaning arrangement includes a superheated water source (118) configured to heat water above 100°C at elevated pressure to form superheated water, which is supplied to the moulding tool. A pressurized air source (120) provides pressurized air, and a mixing unit (122) combines the superheated water with the pressurized air. A valve arrangement (124a-b) controllably delivers the mixture to the inlet (108), enabling in-line cleaning of the compression moulding tool.

## Description

### Field of the Invention

The present invention relates to a cleaning process for a moulding tool for forming a fibrous pulp product.

### Background of the Invention

The food packaging industry is increasingly shifting toward environmentally sustainable solutions, driven by a growing awareness of the environmental impact caused by single-use plastics. Single-use plastic containers, widely used for food packaging, contribute significantly to persistent plastic pollution. Plastic containers frequently end up in landfills or natural ecosystems, where they degrade very slowly posing threats to wildlife and the environment. Furthermore, many plastic containers lack suitability for heating in conventional ovens, which limits their functionality for food preparation.

To address these challenges, alternatives such as fibrous pulp trays are being adopted. Fibrous pulp trays are manufactured from renewable and recyclable materials and offer several benefits. Advantages of fibrous pulp trays include biodegradability, compostability, and versatility for applications involving cold storage and heating in microwave or conventional ovens. The adoption of fibrous pulp trays aligns with efforts to reduce the environmental impact of food packaging while maintaining usability across a wide range of applications.

The manufacture of fibrous pulp trays typically involves compression moulding processes. During the moulding process, heated moulding tools are used to shape pulp fibers into the desired configurations. Over time, the vacuum and compressed air channels within the moulding tools become clogged due to the accumulation of fiber residues, fines, and chemical additives such as alkyl ketene dimer (AKD). This clogging reduces the efficiency of the moulding tools and compromises the quality of the manufactured trays.

A current approach to cleaning the moulding tools involves removing the tools from the forming machine, disassembling them, and performing manual cleaning with cleaning agents and physical scrubbing. Manual cleaning methods are labor-intensive and may require many hours of downtime, including time for cooling and reheating the machine. Production interruptions caused by tool maintenance adversely affect productivity and increase operational costs.

Accordingly, there is a need for an improved cleaning arrangement for compression moulding tools used in the manufacture of fibrous pulp trays which could reduce downtime, improve the performance of the moulding tools, and support ongoing efforts to replace single-use plastics with sustainable packaging alternatives.

### Summary

In view of above-mentioned and other drawbacks of the prior art, it is an object of the present invention to provide an in-line cleaning arrangement for a compression moulding tool for manufacturing a fibrous pulp product such as a tray, and a method for controlling the in-line cleaning arrangement.

According to a first aspect of the invention, there is provided an in-line cleaning arrangement for a compression moulding tool for manufacturing a fibrous pulp product, the compression moulding tool comprising: a first moulding element; a second moulding element configured to press against the first mould element to compress a fibrous pulp product located therebetween; an inlet connected to drain channels of the second moulding element; and an outlet connected to drain channels of the first moulding element, wherein the cleaning arrangement comprises: a superheated water source configured to heat water to a temperature above 100°C at an elevated pressure to form superheated water, and to provide the superheated water to the compression moulding tool; a pressurized air source configured to provide pressurized air to the compression moulding tool; a mixing unit arranged to receive and to mix the superheated water with the pressurized air; and a valve arrangement configured to controllably provide a mix of superheated water and pressurized air to the inlet of the compression moulding tool.

The superheated water source is configured to heat water to a temperature exceeding 100°C while maintaining the water in a liquid state under elevated pressure, thereby providing a cleaning medium which is highly effective at dissolving or softening contaminants such as fiber residues, fines, and chemical additives like alkyl ketene dimer (AKD), which tend to accumulate in the moulding tool's drain channels.

The pressurized air source provides compressed air to the moulding tool. The inclusion of pressurized air adds a mechanical component to the cleaning process, helping to dislodge and remove loosened contaminants from the drain channels of the elements of the compression moulding tool. The combination of superheated water and pressurized air in a mixed state creates a synergistic cleaning action that is more effective than either medium used alone.

The mixing unit is arranged to receive the superheated water and pressurized air and to mix them into a cleaning medium to be provided in the existing drain channels of the moulding tool. The configuration and operation of the mixing unit is essential for ensuring that the two cleaning agents are delivered in an effective manner. For instance, the mixing unit might use a specific mechanism, such as a static mixer or venturi effect, to homogenize the mixture before it reaches the moulding tool's inlet.

The present invention is based on the realization that the integration of superheated water and pressurized air offers a highly effective cleaning solution suitable for full automation. Superheated water, with its elevated temperature and pressure, is capable of dissolving and loosening residues such as fiber fines and alkyl ketene dimer (AKD) deposits. These residues are known to clog the drain channels of moulding tools, leading to inefficiencies and degraded product quality. The addition of pressurized air enhances the cleaning action by providing a mechanical force that dislodges and removes loosened contaminants from the channels, resulting in thorough cleaning.

Furthermore, the automated and controlled nature of the system extends the lifespan of the moulding tool by preventing damage caused by irregular cleaning or thermal shock. The system promotes consistent performance and reduces wear and tear associated with manual cleaning methods. By incorporating environmentally friendly cleaning agents, i.e. water and air, the cleaning arrangement aligns with efforts to reduce reliance on chemical cleaning agents.

The valve arrangement is configured to regulate the flow rates of superheated water and pressurized air, as well as determining the proportions of each component in the mix, thereby allowing for precise control over the delivery of the cleaning medium.

A fibrous pulp product manufactured by the described compression moulding tool may in the present context be a container such as a tray having a floor portion and a number of sidewalls so that it can contain a product. The manufactured tray may also have a substantially horizontal upper flange extending outwards from the sidewalls. Trays for food packaging typically comprise four sidewalls providing a rectangular container, but other shapes are not excluded from being manufactured using the described tool. A tray may also be referred to as a container, box, carton, package, and the like. Accordingly, the described moulds are adapted to manufacture such trays.

According to an example embodiment, the cleaning arrangement further comprises a first valve configured to direct a flow from the outlet of the compression moulding tool to either of a drain or a storage tank. The inclusion of the first valve enables controlled redirection of water used during the cleaning process. During normal operation, the water exiting the compression moulding tool is recirculated to the storage tank, allowing it to be reused in subsequent moulding cycles. However, during a cleaning process, the first valve can be adjusted to direct the flow to a drain, facilitating the removal of water that may contain a higher concentration of fiber residues, AKD, and other contaminants. The described valve thereby ensures efficient use of water during normal operation while also providing a means to dispose of contaminated cleaning water when necessary.

According to an example embodiment, the storage tank is arranged to provide water to the superheated water source. By configuring the storage tank to supply water to the superheated water source, the system enables a closed-loop water cycle, thereby reducing the need for fresh water intake, which in turn decreases water consumption and operational costs.

According to an example embodiment, the valve arrangement comprises a second valve arranged between the superheated water source and the mixing unit, and a third valve arranged between the pressurized air source and the mixing unit. The inclusion of the second and third valves allows for independent control of the superheated water flow and the pressurized air flow into the mixing unit. This arrangement makes it possible to precisely regulate the flow rates, timing, and proportions of superheated water and pressurized air in the cleaning medium. Such control enables cleaning to be tailored to different cleaning needs, allowing for more effective removal of contaminants while reducing water and air consumption. Additionally, the ability to control the valves independently provides the option to clean with only water, only air, or a combination of both, offering greater flexibility in cleaning strategies.

According to an example embodiment, the second valve is configured to be closed unless a difference in temperature between the moulding tool and the superheated water is below a predetermined difference threshold value. The configuration of the second valve ensures that the flow of superheated water to the moulding tool is delayed until the temperature difference between the moulding tool and the superheated water is within a safe range. This feature prevents rapid temperature changes, which could otherwise induce thermal stress in the moulding tool. By controlling the temperature difference, the system avoids deformation, cracking, or other damage that could result from thermal shock. As a result, the operational lifespan of the moulding tool is extended, maintenance needs are reduced, and production downtime is minimized.

According to an example embodiment, the superheated water source is configured to control the temperature of superheated water to be lower than a temperature of the first and second moulding elements. By controlling the temperature of the superheated water to remain below the temperature of the first and second moulding elements, the system avoids sudden cooling of the surface of the moulding tool, thereby reducing the risk of thermal stress, which could cause expansion, contraction, or material fatigue in the moulding tool. Ensuring that the cleaning water is at a lower temperature than the moulding elements allows cleaning to be carried out more gently, preserving the structural integrity of the tool. Additionally, since the temperature of the tool is not significantly reduced during cleaning, cleaning can be started and production can be resumed more quickly, resulting in shorter production downtime.

According to an example embodiment, the superheated water source is configured to control the temperature of superheated water so that a difference in temperature between the first and second moulding elements and the superheated water is below a predetermined difference threshold value. Controlling the temperature difference between the superheated water and the moulding elements prevents sudden changes in the temperature of the tool, which could cause thermal stress or damage to the moulding tool. By keeping the temperature difference within a defined threshold, the cleaning process is performed in a controlled and safe manner, avoiding thermal expansion or contraction of the tool material.

According to an example embodiment, the predetermined difference threshold value is in the range of 20°C to 40°C. The specification of a predetermined temperature difference threshold in the range of 20°C to 40°C ensures that the temperature change experienced by the moulding tool is gradual enough to prevent thermal stress. This range represents a balance between effective cleaning and protection of the moulding tool's material properties. By operating within this range, the risk of cracking, warping, or other thermal damage to the tool is minimized. Additionally, since the tool's temperature does not need to change significantly during cleaning, production can resume more quickly after the cleaning process is complete.

According to an example embodiment, the cleaning arrangement further comprises: a first temperature sensor arranged to determine a temperature of at least one of the first and second moulding elements; and a second temperature sensor arranged to determine a temperature of the superheated water. The addition of a first temperature sensor and a second temperature sensor enables the system to continuously monitor the temperature of the moulding tool and the superheated water. By measuring these temperatures in real time, the system can dynamically adjust the operation of valves, water flow, and cleaning processes to prevent thermal stress. This capability allows the system to maintain an optimal temperature difference between the moulding tool and the superheated water, ensuring effective cleaning without risking damage to the tool. The use of sensors also supports automation, allowing the system to operate autonomously without the need for manual intervention.

According to an example embodiment, the storage tank is a white water tank. The use of a white water tank allows the system to collect and store water that contains low levels of dissolved fibers, fines, and other light contaminants. Reusing white water for cleaning reduces the reliance on fresh water, supporting sustainable water management in the manufacturing process. Since white water is a by-product of pulp production, its reuse as a cleaning medium provides a practical and cost-effective use of an existing resource.

According to an example embodiment, the mixing unit is a tube arranged at the inlet of the compression moulding tool. Positioning the mixing unit as a tube at the inlet of the compression moulding tool ensures that the mixed cleaning medium is delivered directly to the tool's internal drain channels. By arranging the mixing unit at the point of entry, the system delivers the cleaning medium as a homogenous mixture with consistent flow and pressure. This arrangement reduces energy losses that could occur over longer delivery distances and ensures that cleaning is more effective, particularly in areas of the tool that are difficult to reach. The direct delivery of the cleaning medium enhances cleaning efficiency and reduces cleaning time.

According to an example embodiment, the superheated water source is configured to heat the water to a temperature in the range of 100°C to 200°C. By heating the water to a temperature in the range of 100°C to 200°C, the system ensures that the water remains in a liquid state under pressure while achieving sufficient thermal energy to dissolve fiber fines, AKD, and other contaminants. Superheated water in this range is highly effective at breaking down sticky or solidified residues that would not be easily removed with lower-temperature water. The ability to operate up to 200°C also provides flexibility to handle more challenging cleaning tasks, making the system more versatile.

According to an example embodiment, the superheated water source is configured to heat the water at a pressure in the range of 100 bar to 200 bar. Heating the water at pressures between 100 bar and 200 bar allows the system to maintain the water in a liquid state at temperatures above its normal boiling point. This pressurization is essential for producing superheated water, which is more effective at dissolving and dislodging contaminants. By operating within this pressure range, the system can ensure stable production of superheated water, enhancing cleaning performance and maintaining operational safety.

According to an example embodiment, the pressurized air source is configured to provide air at a pressure in the range of 5 bar to 10 bar. Providing pressurized air at a pressure of 5 bar to 10 bar ensures sufficient force to dislodge contaminants from the internal drain channels of the moulding tool. This pressure range is strong enough to remove lodged particles while avoiding damage to the moulding tool.

According to a second aspect of the invention, there is provided a method for controlling an in-line cleaning arrangement for a compression moulding tool for manufacturing a fibrous pulp tray, the compression moulding tool comprising: a first moulding element; a second moulding element configured to press against the first moulding element to compress a fibrous pulp product located therebetween; an inlet connected to drain channels of the second moulding element; and an outlet connected to drain channels of the first moulding element, wherein the cleaning arrangement comprises: a control unit configured to control the cleaning arrangement; a superheated water source configured to superheat water to a temperature above 100°C at an elevated pressure to form superheated water, and to provide the superheated water to the compression moulding tool; a pressurized air source configured to provide pressurized air to the compression moulding tool; a mixing unit arranged to receive and to mix the superheated water and the pressurized air; and a valve arrangement configured to controllably provide a mix of superheated water and pressurized air to the inlet of the compression moulding tool; wherein the method comprises, by the control unit: receiving an indication to initiate a cleaning process; controlling the first valve to direct the flow from the outlet of the compression moulding tool to the drain; determining that a difference in temperature between the moulding tool and the superheated water is below a predetermined difference threshold value; and controlling the valve arrangement to provide a mix of superheated water and pressurized air to the inlet of the compression moulding tool.

According to an example embodiment, the method further comprises: determining a vacuum pressure after the outlet of the moulding tool; and initiating a cleaning process if the vacuum pressure is above a predetermined pressure threshold value. The determination of vacuum pressure after the outlet of the moulding tool allows for continuous monitoring of the status of the drain channels. An increase in vacuum pressure indicates a restriction in airflow caused by the accumulation of contaminants such as fiber fines, AKD, or other residues within the channels. By initiating a cleaning process when the vacuum pressure surpasses a predetermined threshold, the system ensures that blockages are addressed at an early stage, which in turn prevents severe clogging, reduces production interruptions, and extends the operational lifespan of the moulding tool. Furthermore, by relying on actual process conditions to trigger a cleaning cycle, the system avoids unnecessary cleaning cycles, leading to improved efficiency and reduced resource consumption. The use of vacuum pressure as a control parameter provides a straightforward and effective method for detecting early signs of clogging, enhancing system responsiveness and production continuity.

According to an example embodiment, the method further comprises: determining a fluid flow after the outlet of the moulding tool; and initiating a cleaning process if the fluid flow is below a predetermined flow threshold value. The determination of fluid flow after the outlet of the moulding tool provides a direct measurement of the drainage capacity of the system. A reduction in fluid flow is an indication that contaminants, such as fiber fines and AKD, are accumulating in the drain channels, causing a restriction in the flow path. By initiating a cleaning process when the fluid flow drops below a predetermined threshold, the system ensures that blockages are cleared before they cause significant production delays. This approach enables condition-based cleaning, where cleaning occurs only when it is actually needed, thereby reducing unnecessary cleaning cycles. The use of fluid flow as a control parameter provides an alternative or complementary method to vacuum pressure monitoring, offering increased robustness in clog detection. The ability to detect and respond to reduced flow ensures the continuous operation of the moulding tool and minimizes production downtime.

According to an example embodiment, the method further comprises: determining a parameter indicative of a turbidity of water from the outlet of the moulding tool; and ending the cleaning process if the turbidity is lower than a predetermined turbidity threshold value. The determination of a parameter indicative of the turbidity of water from the outlet of the moulding tool enables the system to assess the cleanliness of the discharged water. During the cleaning process, water exiting the drain channels carries contaminants such as fiber fines, AKD, and other residues, resulting in high turbidity. As the cleaning progresses and the contaminants are cleared, the turbidity of the water decreases. By stopping the cleaning process once the turbidity falls below a predetermined threshold, the system ensures that cleaning is performed only for as long as necessary. This approach prevents unnecessary continuation of the cleaning process, reducing water consumption and energy usage. The ability to terminate the cleaning process based on real-time turbidity data enables efficient and adaptive cleaning control, improving overall process efficiency while maintaining the cleanliness of the moulding tool.

Turbidity refers to the cloudiness or haziness of a liquid caused by suspended particles that scatter and absorb light. Parameters indicative of turbidity include light scattering intensity, light transmittance, and backscatter intensity. Light scattering intensity is measured when light is directed into the fluid and the amount of light scattered at a specific angle, often 90 degrees, is detected. Light transmittance refers to the reduction in light intensity as it passes directly through the water, with higher particle concentrations resulting in lower transmittance. Backscatter intensity is measured when light is reflected back toward the source, providing an alternative measure of particle concentration. These parameters are used to quantify turbidity and assess the presence of contaminants.

Turbidity can be determined using several methods, with nephelometric measurement (NTU) being the most widely used. In nephelometry, a light source emits a beam into the water, and a sensor measures the intensity of light scattered at a 90-degree angle, providing a standardized turbidity measurement in Nephelometric Turbidity Units (NTU). Another method involves measuring optical transmittance, where light passes through the fluid and the reduction in light intensity is used to assess turbidity. Backscatter measurement relies on detecting light that is reflected back toward the source, which is useful in compact systems or when particles are unevenly distributed. For cleaning arrangements in compression moulding tools, nephelometric sensors and optical transmittance sensors may be preferred due to their accuracy, reliability, and ability to provide continuous, real-time feedback for automated control of the cleaning process.

Further effects and features of the second aspect of the invention are largely analogous to those described above in connection with the first aspect of the invention.

Further features of, and advantages with, the present invention will become apparent when studying the appended claims and the following description. The skilled person realizes that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 schematically illustrates a compression moulding tool and a cleaning arrangement for a compression moulding tool according to an example embodiment;
Fig. 2 schematically illustrates a set of mould elements for a compression moulding tool according to an example embodiment;
Fig. 3 is a flow chart outlining steps of a method for controlling an in-line cleaning arrangement for a compression moulding tool according to an example embodiment;
Fig. 4 schematically illustrates details of a cleaning arrangement for a compression moulding tool according to an example embodiment;
Fig. 5 is a flow chart outlining steps of a method for controlling an in-line cleaning arrangement for a compression moulding tool according to an example embodiment; and
Fig. 6 is a flow chart outlining steps of a method for controlling an in-line cleaning arrangement for a compression moulding tool according to an example embodiment.

### Detailed Description of Example Embodiments

In the present detailed description, various aspects and embodiments of the present invention are mainly described with reference to a manufacturing assembly comprising a compression moulding tool for manufacturing a fibrous pulp tray suitable for food packaging.

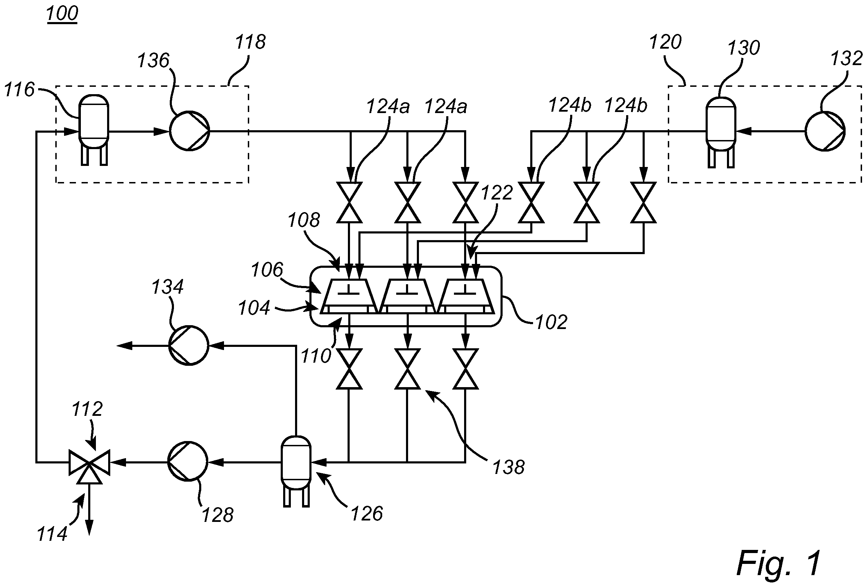

Fig. 1 schematically illustrates an in-line cleaning arrangement 100 for a compression moulding tool 102 for manufacturing a fibrous pulp product. Fig. 1 The compression moulding tool 102 is typically part of a production line for manufacturing fibrous pulp products such as trays.

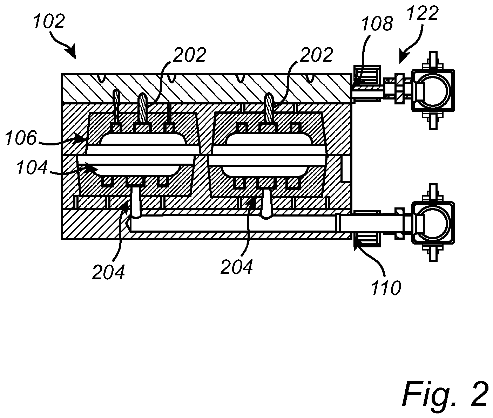

The compression moulding tool 102 is illustrated in further detail in Fig. 2 schematically illustrating pairs of first and second moulding elements 104, 106 for a compression moulding tool 102.

As illustrated in Figs. 1-2, the compression moulding tool 102 comprises a first moulding element 104, and a second moulding element 106 configured to press against the first moulding element 104 to compress a fibrous pulp product located therebetween. The compression moulding tool 102 further comprises an inlet 108 connected to drain channels 202 of the second moulding element 106 and an outlet 110 connected to drain channels 204 of the first moulding element 104. The channels are here referred to as drain channels 202, 204 for both the first and second moulding element 104, 106 even though the flow direction through the drain channels 202, 204 can be selected arbitrarily depending on the overall configuration of the compression moulding tool 102.

Moreover, the illustrated compression moulding tool 102 comprises a 3x2 array of first and second moulding elements, but it should be understood that the described cleaning arrangement and method can equally well be used for a single set of moulding elements as well as for any number of parallelly arranged moulding elements.

The cleaning arrangement 100 comprises a superheated water source 118 configured to heat water to a temperature above 100°C at an elevated pressure to form superheated water, and to provide the superheated water to the compression moulding tool 102, a pressurized air source 120 configured to provide pressurized air to the compression moulding tool 102, a mixing unit 122 arranged to receive and to mix the superheated water with the pressurized air, and a valve arrangement 124a-b configured to controllably provide a mix of superheated water and pressurized air to the inlet 108 of the compression moulding tool 102.

The mixing unit 122 may for example be a tube, a chamber, or a combination of the two configured to receive and mix the superheated water with the pressurized air before the mix reaches the inlet 108 of the compression moulding tool 102. Moreover, the mixing unit 122 may comprise a single inlet for receiving both superheated water and compressed air, or there may be two or more separate inlets configured to receive air and water separately to be mixed in the mixing unit 122.

When the tool is closed, i.e. when the second moulding element 106is pressed against the first moulding element 104, it can be assumed that a closed fluid circuit is formed between the inlet of the second moulding element 106 and the outlet 110 of the second moulding element 106. Thereby, during cleaning, the cleaning medium is provided to the inlet 108 of the second moulding element 106, through the second and first moulding elements 106, 104 and out through the outlet 110 of the first moulding element 104. However, it is equally possible to provide a cleaning arrangement having the opposite flow direction, i.e. from the first moulding element 104 to the second moulding element 106.

In the example embodiment illustrated in Fig. 1, the superheated water source 118 comprises a white water tank 116 and a hot-water high-pressure cleaner 136 configured to heat and pressurize the water from the white water tank 116. The superheated water can thereby be provided to the mixing unit 122 by opening a water valve 124a. The pressurized air source 120 comprises a compressed air container 130 and a compressor 132 for filling the container 130 with compressed air, and the compressed air can subsequently be provided to the mixing unit 122 via an air valve 124b.

The first moulding element is connected to a vacuum system comprising a vacuum pump 134 configured to form a vacuum at the outlet 110 of the first moulding element 104, where the connection is controlled by a vacuum valve 138. After the vacuum valve 138, a separation tank 126 and a separation pump 128 is arranged to separate the vacuum air flow from the liquid or vapor flow.

The vacuum system is in turn connected to the white water tank 116 to recirculate water during the manufacturing process, and the white water tank is advantageously used as the storage tank 116 for providing superheated water. The cleaning arrangement further comprises a first valve 112 configured to direct a flow from the outlet of the compression moulding tool 102 to either of a drain 114 or a storage tank 116, thereby making it possible to direct contaminated water during a cleaning process directly to a drain 114.

The described cleaning arrangement and cleaning process can be implemented for compression moulding tools in both of a hot pressing and a cold pressing step.

The temperature of white water may be approximately 40-50°C after a hot-pressing step and thereby needs to be heated before being used in a cleaning process. When a cleaning process is initiated, the superheated water source 118 first heats water to a temperature in the range of 100°C to 200°C, such as 200°C. The hot water valve 124a is subsequently opened, and it is ensured that the compressed air valve 124b as well as the vacuum valve 138 at the outlet 110 is open. If it is desirable to discard water which is contaminated by the cleaning process, the drain valve 112 is set to direct the water to a drain outlet 114.

In an example implementation, the moulding elements in a hot pressing step may have a temperature of approximately 180°C during production, in which case a superheated water temperature of at least 150°C is preferable to reduce the amount of rapid cooling to which the moulding elements are subjected. The specific temperature used for the superheated water and also the desirable maximum temperature difference between the water and the moulding elements can of course be set as preferred in a particular application and for example based on material properties of the moulding elements.

The superheated water is mixed with compressed air at the mixing unit 122 at the inlet 108 to the second moulding element 106, where the flow of compressed air increases the overall flow through the compression moulding tool 102, thereby increasing the efficiency of the cleaning process. The mixing unit may be a tube or hose adapted to withstand the elevated temperature and pressure of the superheated water and air mix. The superheated water source 118 is configured to heat the water at a pressure in the range of 100 bar to 200 bar, such as 150 bar and the pressurized air source 120 is configured to provide air at a pressure in the range of 5 bar to 10 bar, such as 8 bar.

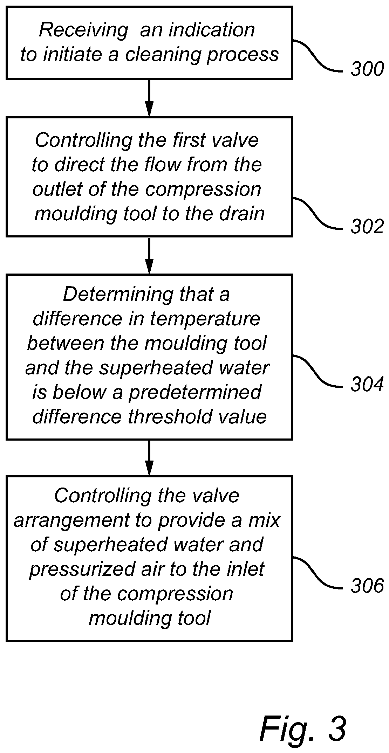

Fig. 3 is a flow chart outlining the steps of a method for controlling the cleaning arrangement 100 for the compression moulding tool 102. The described method is performed by a control unit of the compression moulding tool, which may be a control unit connected to the overall production process or a standalone control unit for the compression moulding tool.

The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

The method comprises receiving 300 an indication to initiate a cleaning process, controlling 302 the first valve 112 to direct the flow from the outlet 110 of the compression moulding tool 102 to the drain 114.

Once the valve 112 is set in the correct position, the next step is to determine 304 that a difference in temperature between the moulding element 104, 106 and the superheated water is below a predetermined difference threshold value, where the threshold value may be in the range of 20°C to 40°C.

Next, the valve arrangement 124a-b is controlled 306 to provide a mix of superheated water and pressurized air to the inlet of the compression moulding tool 102, thereby cleaning the tool.

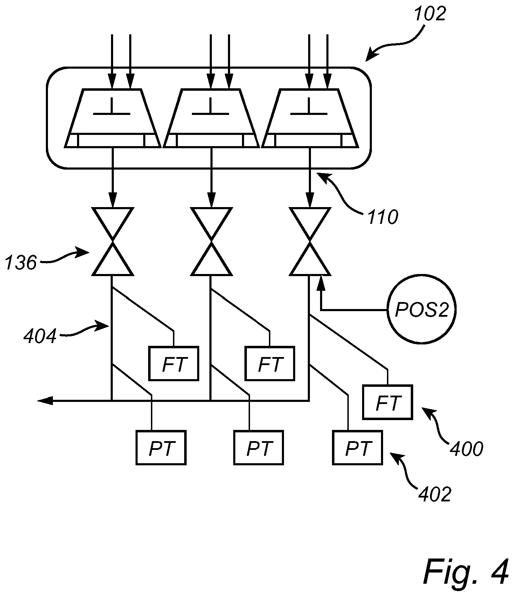

The method may also comprise monitoring of the manufacturing process to determine when cleaning of the compression moulding tool 102 is needed. Fig. 4 illustrates an example embodiment where the cleaning arrangement further comprises a flow sensor 400 and a pressure sensor 402 arranged in a flow channel 404 after the outlet 110.

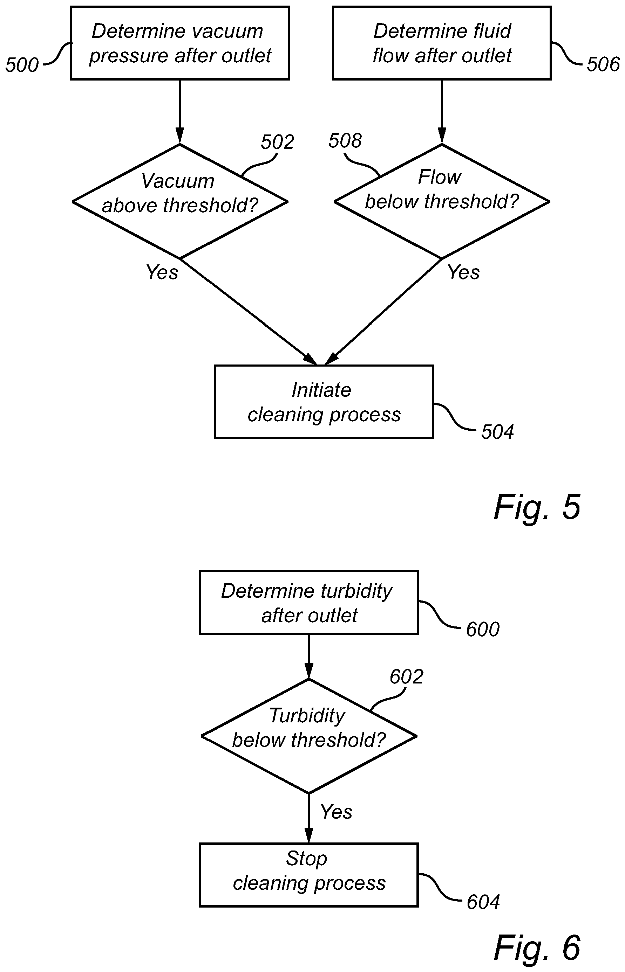

Fig. 5 is a flow chart outlining steps of a method of determining if and when to initiate a cleaning process in the compression moulding tool 102. The method comprises determining 500 a vacuum pressure after the outlet 110 of the first mould element, and if 502 the vacuum pressure is above a predetermined pressure threshold value, a cleaning process is initiated 504. The method may further comprise determining 506 a fluid flow after the outlet 110 of the first mould element, and if 508 the fluid flow is below a predetermined flow threshold value, a cleaning process is initiated 504.

The flow sensor 400 and the pressure sensor 402 can be used individually or in combination, and in a given implementation it can be decided if one sensor type is preferable to the other. Moreover, the monitoring of the pressure and/or flow can be performed manually, or the measured pressure and/or flow values can be provided to process management circuitry for automatic monitoring and initiation of the cleaning process.

Fig. 6 schematically illustrates a further method steps aimed at determining when the compression molding tool is clean and when the cleaning process can be terminated. The method comprises determining 600 a parameter indicative of a turbidity of water from the outlet 110 of the first mould element; and if 602 the turbidity is lower than a predetermined turbidity threshold value, stopping 604 the cleaning process.

The described cleaning method may also be performed regularly on a fixed interval, for example in the range of every 6h to 10h, such as every 8h. The length of a cleaning process may also be fixed, for example with a duration in the range of 10 min to 20 min, such as 15 min. The specific interval and duration for the cleaning process are preferably tailored for a specific implementation based on the requirements of that specific machine configuration.

According to an example, there is also provided a system and method for controlling a cleaning process for a moulding tool for manufacturing a fibrous pulp tray, the moulding tool comprising at least a first moulding element and a second moulding element configured to press against the first moulding element to form a fibrous pulp product, the method comprising: providing superheated water to the moulding tool, wherein the superheated water is heated to a temperature above 100°C at an elevated pressure; directing the superheated water into fluid channels of at least one of the first and second moulding elements; and controlling the flow of fluid exiting the moulding tool to either a drain or a fluid recirculation system. The system and method may further comprise combining the superheated water with a pressurized gas prior to introduction into the fluid channels of the moulding tool, wherein the pressurized gas facilitates the removal of residues from the channels.

Even though the invention has been described with reference to specific exemplifying embodiments thereof, many different alterations, modifications and the like will become apparent for those skilled in the art. Also, it should be noted that parts of the described tool and method may be omitted, interchanged or arranged in various ways, the tool and method yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. An in-line cleaning arrangement (100) for a compression moulding tool (102) for manufacturing a fibrous pulp product, the compression moulding tool comprising:
a first moulding element (104);
a second moulding element (106) configured to press against the first mould element to compress a fibrous pulp product located therebetween;
an inlet (108) connected to drain channels (202) of the second moulding element; and
an outlet (110) connected to drain channels (204) of the first moulding element, wherein the cleaning arrangement comprises:
a superheated water source (118) configured to heat water to a temperature above 100°C at an elevated pressure to form superheated water, and to provide the superheated water to the compression moulding tool;
a pressurized air source (120) configured to provide pressurized air to the compression moulding tool;
a mixing unit (122) arranged to receive and to mix the superheated water with the pressurized air; and
a valve arrangement (124a-b) configured to controllably provide a mix of superheated water and pressurized air to the inlet of the compression moulding tool.

2. The cleaning arrangement according to claim 1, further comprising a first valve (112) configured to direct a flow from the outlet of the compression moulding tool to either of a drain (114) or a storage tank (116), and .

3. The cleaning arrangement according to claim 2, wherein the storage tank (116) is arranged to provide water to the superheated water source (118).

4. The cleaning arrangement according to claim 2 or 3, wherein the valve arrangement comprises a second valve (124a) arranged between the superheated water source and the mixing unit, and a third valve (124b) arranged between the pressurized air source and the mixing unit.

5. The cleaning arrangement according to claim 2, wherein the second valve is configured to be closed unless a difference in temperature between the moulding tool and the superheated water is below a predetermined difference threshold value.

6. The cleaning arrangement according to any one of the preceding claims, wherein the superheated water source is configured to control the temperature of superheated water to be lower than a temperature of the first and second moulding elements.

7. The cleaning arrangement according to any one of the preceding claims, wherein the superheated water source is configured to control the temperature of superheated water so that a difference in temperature between the first and second moulding elements and the superheated water is below a predetermined difference threshold value.

8. The cleaning arrangement according to claim 7, wherein the predetermined difference threshold value is in the range of 20°C to 40°C.

9. The cleaning arrangement according to any one of the preceding claims, further comprising:
a first temperature sensor arranged to determine a temperature of at least one of the first and second moulding element; and
a second temperature sensor arranged to determine a temperature of the superheated water.

10. The cleaning arrangement according to any one of the preceding claims, wherein the mixing unit is a tube arranged at the inlet of the compression moulding tool.

11. The cleaning arrangement according to any one of the preceding claims, wherein the superheated water source is configured to heat the water to a temperature in the range of 100°C to 200°C.

12. The cleaning arrangement according to any one of the preceding claims, wherein the superheated water source is configured to heat the water at a pressure in the range of 100 bar to 200 bar and/or wherein the pressurized air source (120) is configured to provide air at a pressure in the range of 5 bar to 10 bar.

13. Method for controlling an in-line cleaning arrangement (100) for a compression moulding tool (102) for manufacturing a fibrous pulp product, the compression moulding tool comprising:
a first moulding element (104);
a second moulding element (106) configured to press against the first moulding element to compress a fibrous pulp product located therebetween;
an inlet (108) connected to drain channels (202) of the second moulding element; and
an outlet (110) connected to drain channels (204) of the first moulding element, wherein the cleaning arrangement comprises:
a control unit (130) configured to control the cleaning arrangement;
a superheated water source (118) configured to superheat water to a temperature above 100°C at an elevated pressure to form superheated water, and to provide the superheated water to the compression moulding tool;
a pressurized air source (120) configured to provide pressurized air to the compression moulding tool;
a mixing unit (122) arranged to receive and to mix the superheated water and the pressurized air; and
a valve arrangement (124a-b) configured to controllably provide a mix of superheated water and pressurized air to the inlet of the compression moulding tool;
wherein the method comprises, by the control unit:
receiving (300) an indication to initiate a cleaning process;
controlling (302) the first valve to direct the flow from the outlet of the compression moulding tool to the drain;
determining (304) that a difference in temperature between the moulding tool and the superheated water is below a predetermined difference threshold value; and
controlling (306) the valve arrangement to provide a mix of superheated water and pressurized air to the inlet of the compression moulding tool.

14. The method according to claim 13, further comprising:
determining (500) a vacuum pressure after the outlet (110) of the first mould element; and
if (502) the vacuum pressure is above a predetermined pressure threshold value, initiating (504) a cleaning process.

15. The method according to claim 13 or 14, further comprising:
determining (506) a fluid flow after the outlet (110) of the first mould element; and
if (508) the fluid flow is below a predetermined flow threshold value, initiating (504) a cleaning process.

16. The method according to any one of claims 13 to 15, further comprising:
determining (600) a parameter indicative of a turbidity of water from the outlet (110) of the first mould element; and
if (602) the turbidity is lower than a predetermined turbidity threshold value, ending (604) the cleaning process.
